(19) Europäisches Patentamt / European Patent Office / Office européen des brevets

(11) **EP 2 414 297 B1**

(12) **EUROPÄISCHE PATENTSCHRIFT**

(45) Veröffentlichungstag und Bekanntmachung des Hinweises auf die Patenterteilung:
**01.08.2018   Patentblatt 2018/31**

(51) Int Cl.:
*C03B 21/02* (2006.01)    *C03C 10/00* (2006.01)
*C03B 29/04* (2006.01)    *C03B 32/02* (2006.01)
*C03B 35/14* (2006.01)    *C03B 35/16* (2006.01)
*C03B 35/18* (2006.01)    *C03C 3/083* (2006.01)
*C03B 29/08* (2006.01)

(21) Anmeldenummer: **10710551.2**

(22) Anmeldetag: **20.03.2010**

(86) Internationale Anmeldenummer:
**PCT/EP2010/001766**

(87) Internationale Veröffentlichungsnummer:
**WO 2010/112148 (07.10.2010 Gazette 2010/40)**

(54) **VERFAHREN UND VORRICHTUNG ZUR KERAMISIERUNG VON GLÄSERN**

METHOD AND DEVICE FOR CERAMICIZING GLASSES

PROCÉDÉ ET DISPOSITIF DE CÉRAMISATION DE VERRES

(84) Benannte Vertragsstaaten:
**AT BE BG CH CY CZ DK EE ES FI FR GB GR HR HU IE IS IT LI LT LU LV MC MK MT NL NO PL PT RO SE SI SK SM TR**

(30) Priorität: **31.03.2009   DE 102009015089**

(43) Veröffentlichungstag der Anmeldung:
**08.02.2012   Patentblatt 2012/06**

(73) Patentinhaber: **SCHOTT AG**
**55122 Mainz (DE)**

(72) Erfinder:
• **GABEL, Falk**
  **65388 Schlangenbad (DE)**
• **JOHANSSON, Thoralf**
  **55268 Nieder-Olm (DE)**
• **MARTENS, Uwe**
  **55252 Mainz Kastel (DE)**
• **ROOS, Christian**
  **65197 Wiesbaden (DE)**
• **SCHRÖDER, Friedrich, Georg**
  **55218 Ingelheim (DE)**

(74) Vertreter: **Herden, Andreas F.**
**Blumbach - Zinngrebe**
**Patent- und Rechtsanwälte PartG mbB**
**Alexandrastraße 5**
**65187 Wiesbaden (DE)**

(56) Entgegenhaltungen:
EP-A1- 1 146 018      EP-A2- 1 321 440
GB-A- 2 204 311      US-A- 3 804 608
US-A1- 2005 016 214

## Beschreibung

Die Erfindung betrifft ein Verfahren und eine Vorrichtung zur Keramisierung von Grünglas. Insbesondere betrifft die Erfindung ein Verfahren und eine Vorrichtung, die die Keramisierung von Grüngläsern direkt auf den Rollen eines Transportsystems ermöglichen. Dem Transport von Grüngläsern auf Rollen steht ein hängender Transport des Glases bei der Keramisierung gegenüber. Ein solcher ist in der GB 2 204 311 A offenbart, wobei Glasplatten hängend in Paketen in Kammern verschiedener Temperatur eines Ofens zur Keramisierung für vorbestimmte Zeiträume gebracht werden.

Aus dem Stand der Technik sind daneben kontinuierliche, direkt an den Prozess der Heißformung anschließende Keramisierungsverfahren bekannt. Die US 2005/016214 A1 lehrt ein kontinuierliches Verfahren zur Herstellung von kristallisierten Glasplatten und eine Vorrichtung zur Ausführung des Verfahrens. Dieses Verfahren umfasst die Schritte des Schmelzens eines kristallisierbaren Glasmaterials, Einstellen der Viskosität des geschmolzenen Materials, die Formung des Glases zwischen Rollen und/oder Walzen zu einem Glasband und das Führen des Glasbandes durch einen Kristallisationstunnel, in dem das Glasband kristallisiert. Der Transport des Glasbandes im Kristallisationstunnel erfolgt laut Lehre auf einem Förderband, das aus Rollen eines hitzebeständigen Materials besteht. Optional ist vor dem Eintritt in den Kristallisationstunnel noch eine "Druckrolle" vorgesehen, die das frisch geformte Glasband gegen das Förderband drückt, um ein planes Band zu erhalten.

Die zitierte Schrift enthält jedoch zu vielen wichtigen Parametern, beispielsweise der Gesamtdauer des Keramisierungsprozesses, den Maximaltemperaturen der Keramisierung sowie zugehörigen Viskositäten des Glasbandes oder den Abständen zwischen den einzelnen Rollen des Förderbandes keine Angaben. Diese Angaben sind jedoch wesentlich, um Glaskeramik-Artikel mit hinreichender Ebenheit produzieren zu können.

Während der Phase der maximalen Temperaturbelastung, also im Allgemeinen während der Volumenkristallisation, weist das Glasband sehr niedrige Viskositäten auf, die dazu führen, dass das Glasband bei zu großen Abständen zwischen den Rollen "durchsackt" und das keramisierte Produkt somit eine starke Welligkeit aufweist. Es wäre also wünschenswert, das Verfahren so steuern zu können, dass der Zeitraum der geringsten Viskosität, der im Allgemeinen kurz vor und zu Beginn der Volumenkristallisation erreicht wird, nur so kurz wie möglich durchfahren wird. Dies ist jedoch, wie dem Fachmann bekannt ist, schwierig, da kurze Zeiträume mit hoher Viskosität durch zumindest zeitweise sehr hohe Keramisierungstemperaturen erkauft werden, die wiederum den exothermen Prozess der Keramisierung schwer steuerbar machen. Darüber hinaus führen kurze Keramisierungszeiten durch die benötigten höheren Temperaturen auch zu niedrigeren minimalen Viskositäten des keramisierenden Grünglases, wodurch dieses schwerer zu handhaben wird, da es sich leichter verformt.

Alle diese Zusammenhänge und Parameter finden in der genannten Schrift keine Erwähnung. Es ist daher davon auszugehen, dass sich das beschriebene Verfahren nur allgemein auf die Machbarkeit einer kontinuierlichen Keramisierung auf Rollen bezieht, die Qualität der erzeugten Produkte dabei aber eine eher untergeordnete Rolle spielt. Produkte, die mit einem so unspezifizierten Verfahren hergestellt werden, weisen vermutlich eine hohe Welligkeit auf und sind damit für viele Anwendungen, die ebenmäßige Produkte verlangen, ohne nachträgliche Behandlung, wie etwa einem einebnenden Schleif- oder Polierprozess, nicht verwendbar.

Neben dem beschriebenen Verfahren sind auch andere Verfahren zur kontinuierlichen Keramisierung von Grüngläsern bekannt, bei denen der Transport zur Vermeidung des Problems der Welligkeit, die durch die nicht durchgängige Auflage des Grünglases auf den Rollen verursacht wird, auf Trägerplatten oder auf einem Bad aus geschmolzenem Metall stattfindet (z.B. US 3, 804, 608 und US 3,809,542 A). Diese Verfahren haben generell den Nachteil, dass sie unter einer Schutzgasatmosphäre durchgeführt werden müssen, die in der Erzeugung aufwendig ist und darüber hinaus zusätzliche Kosten verursacht.

Der Transport des Grünglases auf Trägerplatten hat den Nachteil, dass die Seite des Grünglases, die auf der Trägerplatte aufliegt, nur beschränkt mit der Ofenatmosphäre in Kontakt steht, wodurch sich die Ober- und Unterseite des produzierten Keramik-Artikels hinsichtlich ihrer Eigenschaften, z.B. mechanische Festigkeit, chemische Resistenz, Transparenz, usw. unterscheiden. Darüber hinaus müssen die Trägerplatten bei jedem Einsatz vorgewärmt und auch während der Keramisierung weiter erhitzt werden, was zu einem deutlichen Mehraufwand an Energie führt und auch zeitintensiver ist, da zusätzliche Prozess-Schritte notwendig sind. Eine direkte Keramisierung des Grünglases auf Rollen hat dagegen den Vorteil, dass viel weniger Material, das ausschließlich für den Transport des Grünglases benötigt wird, mit erhitzt werden muss.

Die Lagerung des Grünglases auf einem Bad aus geschmolzenem Metall, beispielsweise auf einem Floatbad aus Zinn, hat den Nachteil, dass die mit dem Bad in Kontakt stehenden Oberflächen des Grünglases durch Bestandteile des Bads kontaminiert werden können. Dies wirkt sich dann nachteilig auf den Keramisierungsprozess aus. Eine Verunreinigung mit Zinn kann beispielsweise zu einer verstärkten Oberflächenkristallisation führen, die hinsichtlich der Qualitätsanforderungen an das Glaskeramik-Produkt unerwünscht ist.

Denn aus der ein gefloatetes Flachglas, das in eine Glaskeramik mit Hochquarz-Mischkristallen umwandelbar ist, beschreibenden EP 1 146 018 A1 ist ja bekannt, die Entstehung störender Oberflächendefekte beim Floaten durch eine Begrenzung der Gehalte von Pt, Rh, ZnO und $SnO_2$ zu vermeiden.

Darüber hinaus kann sie, insbesondere wenn ein Keramisierungsverfahren mit hohen Maximaltemperaturen angewendet wird, zu einer nicht mehr kontrollierbaren Keramisierung des Glasbandes führen und somit den Prozess für die Produktion untauglich machen.

Der Erfindung liegt daher die Aufgabe zugrunde, ein Keramisierungsverfahren und eine Vorrichtung zur Ausführung dieses Verfahrens bereitzustellen, das eine schnelle, energieeffiziente Keramisierung bei hohen Maximaltemperaturen erlaubt und gleichzeitig eine hohe Qualität des keramisierten Produkts hinsichtlich mechanischer, chemischer oder Transparenz-bezogener Eigenschaften sowie insbesondere hinsichtlich der Ebenheit des Produkts sicherstellt. Darüber hinaus sollte das Verfahren auch kontinuierlich zu nutzen sein.

Diese Aufgabe wird durch den Gegenstand der unabhängigen Ansprüche gelöst. Vorteilhafte Ausgestaltungen und Weiterbildungen sind in den Unteransprüchen ausgeführt.

Demgemäß sieht das erfindungsgemäße Verfahren die Keramisierung von Grünglas in Form eines kontinuierlichen Grünglas-Bandes oder einzelner Grünglas-Platten vor, wobei das Grünglas zumindest während der Volumenkristallisation direkt auf Rollen transportiert und/oder gelagert wird. Das Verfahren kann mit hoher Keramisierungsgeschwindigkeit ausgeführt werden, die eine Keramisierung zumindest eines Bereichs des Grünglases nach Abschluss der Formung dieses Bereichs, über die Keramisierung, bis hin zum Abschluss des Kühlens des keramisierten Bereichs in nur 0,5 bis 4 Stunden erlaubt. Dabei umfasst der Zeitraum, in dem das Grünglas maximalen Temperaturen während der Volumenkristallisation ausgesetzt ist, nur 5 bis 60 Minuten, wobei die maximalen Temperaturen zwischen 750 und 1250°C liegen. Dadurch wird die Energieeffizienz, die durch Prozessieren ohne Trägerplatte erzielt wird, weiter erhöht. Das Verfahren ist insofern kontinuierlich, als die Keramisierung im Durchlauf durch den Ofen durchgeführt wird. Die Erfindung ist generell sowohl für die Keramisierung einzelner Platten, als auch eines kontinuierlichen Bands anwendbar. Demgemäß werden insbesondere Grüngläser in Form eines kontinuierlichen Grünglas-Bandes oder einzelner Grünglas-Platten als Ausgangssubstrate verwendet. Im Falle eines Grünglas-Bandes erfolgt vorzugsweise nach der Keramisierung eine Vereinzelung, beziehungsweise ein Auftrennen in einzelne Platten.

Ein Grünglas im Sinne der Erfindung ist allgemein ein Ausgangssubstrat, welches durch Keramisierung mittels des erfindungsgemäßen Verfahrens in eine strukturell vom Material des Ausgangssubstrats verschiedene Glaskeramik umgewandelt wird. Dabei handelt es sich vorzugsweise um amorphe Gläser. Allerdings kann das Grünglas auch bereits Kristallphasen enthalten. Zudem ist daran gedacht, die Erfindung auf Glaskeramiken als Ausgangssubstrate, beziehungsweise Grüngläser anzuwenden und eine Keramisierung in Form eine Umkristallisierung vorzunehmen. Als Beispiel hierfür sei die Umwandlung einer Hochquarz-Mischkristall-Phase des Ausgangssubstrats in eine Keatit-Mischkristall-Phase genannt.

Zumindest kurz vor und während der Volumenkristallisation wird die Temperatur von Ober- und Unterseite des keramisierenden Teilstücks des Grünglases durchgehend gemessen und die Beheizung mittels dieser Informationen anhand von Sollwerten geregelt.

Kurz vor und zumindest zu Beginn der Volumenkristallisation kann die Viskosität des zu keramisierenden Grünglases zumindest zeitweise zwischen $10^7$ und $10^{11}$ dPa·s liegen. Aufgrund dieser niedrigen Viskosität werden an den Transport zumindest in dem Zeitabschnitt, in dem die Viskosität Minimalwerte erreicht, hohe Anforderungen an die Transportvorrichtung gestellt- Sind die Rollenabstände zu weit gewählt, ist die Vorschubgeschwindigkeit zu gering oder die Temperatur zu hoch, kann das zu keramisierende Glasband oder die keramisierende Platte zwischen den stützenden Rollen "durchsacken" und so zu einer unerwünschten Welligkeit des Endprodukts führen. Im Extremfall ist sogar ein Abreißen des Glasbandes zwischen einzelnen Rollen möglich, wodurch der gesamte kontinuierliche Produktionsprozess zum Erliegen käme. Nachdem ein Großteil des Kristallisationsvorgangs innerhalb weniger Minuten stattgefunden hat, steigt die Viskosität durch die Ausbildung der Kristalle im teilweise keramisierten Grünglas wieder steil an. Verformungen, die zum Zeitpunkt der geringsten Viskosität, also unmittelbar vor oder zu Beginn der Kristallisation, entstanden sind, werden gleichsam eingefroren.

Daher ist der Abstand zwischen den Rollen der Transportvorrichtung zumindest im Bereich der Volumenkristallisation eine Funktion der Vorschubgeschwindigkeit des Glasbandes sowie der Temperatur zu diesem Zeitpunkt, die wiederum die niedrigste Viskosität des Grünglases kurz vor Beginn der Volumenkristallisation bestimmt. Aus diesem Grund sollte die Vorschubgeschwindigkeit des Glasbandes bei den niedrigsten viskositäten von $10^7$ bis $10^{11}$ Pa·s zwischen 0,2 und 10 m/min. liegen.

Die Vorschubgeschwindigkeit und/oder die Temperatur werden erfindungsgemäß so geregelt, dass für den Abstand $x_{Rolls}$ zwischen den Rollenachsen gilt:

$$x_{Rolle}^5 \leq 360 * (R_a * t_{Scheibe}^2)/(\rho * g) * v_{Vorschub} * \eta,$$

wobei $R_a$ die maximal zuzulassende Welligkeit (Glasdurchbiegung), $t_{Scheibe}$ die Glasdicke, $\rho$ die Glasdichte, g die Erdbeschleunigung, $v_{Vorschub}$ die Vorschubgeschwindigkeit und $\eta$ die minimale Viskosität des Glases im Verlauf der Keramisierung auf den Rollen ist.

Dabei wird die Temperatur so gesteuert, dass sie im Ofen über eine Breite des zu keramisierenden Grünglases $T_y$ nicht mehr als -5°C bis +5°C von einer vorgegebenen Solltemperatur $T_x$ abweicht, dass der Temperaturunterschied zwischen Ober- und Unterseite des zu keramisierenden Grünglases im Ofen in einem Bereich zwischen -0.5°C bis +1°C liegt und dass eine Reaktion beim Regeln innerhalb von zehn Sekunden erfolgt.

Diese Steuerung ist insbesondere in Bezug auf die möglichst ebene bzw. plane Ausbildung des keramisierten Artikels und zur Vermeidung von Keramisierungsspannungen wichtig, da unterschiedliche Temperaturen zu unterschiedlichen Volumenausdehnungen des heißen Materials führen können. Unterschiedliche Volumenausdehnungen begünstigen wiederum neben der Ausbildung von Welligkeiten nachteilige oder sogar inakzeptable Aufwölbungen der Platten, wie beispielsweise das Hochstehen ihrer Ecken oder die Aufwölbung ihres Mittenbereiches.

Wird also ein Maximalwert der Welligkeit entsprechend dem Parameter $R_a$ vorgegeben, kann mittels dieser Beziehung der maximale Rollenabstand in Abhängigkeit der Vorschubgeschwindigkeit und der minimalen Viskosität bestimmt werden, die bei der Keramisierung erreicht wird.

Bei gegebenem Rollenabstand kann die Beziehung auch durch entsprechende Regelung zumindest eines der Parameter Vorschubgeschwindigkeit oder Temperatur beziehungsweise minimale Viskosität des Glases eingehalten werden. Demgemäß ist erfindungsgemäße Mess- und Regeleinrichtung eingerichtet, die Temperatur und/oder die Vorschubgeschwindigkeit so zu regeln, dass die vorstehende Beziehung erfüllt wird.

Gute Werte für $R_a$ liegen unterhalb von 100 Mikrometer, wie weiter unten noch genauer erläutert wird.

Dabei kann auch eine wie aus der US 2005/016214 A1 bekannte Druckrolle entfallen, ohne dass eine erhöhte Welligkeit entsteht.

Das erfindungsgemäße Verfahren hat mehrere Vorteile gegenüber dem Stand der Technik. Zum einen ist diese Art der Keramisierung grundsätzlich für die Umwandlung von Glasbändern unbegrenzter Länge und Breite geeignet. Die Limitierung von Glasband-Länge und Breite ergibt sich allein aus den vorhandenen technischen Möglichkeiten wie den verfügbaren Aggregaten und ihren Bauteilen (Heizstäbe, Rollenlängen, etc.). Andererseits ist jedoch auch die Keramisierung von vereinzelten Grünglasplatten möglich.

Des Weiteren erfolgt die Keramisierung nicht auf Trägerplatten, sondern auf einem Rollensystem. Eine energieintensive Aufheizung der Trägerplatten, die ausschließlich dem Transport des Grünglases dient und bei jedem Einbringen der Platten in den Ofen erneut anfällt, ist nicht notwendig. Ein Rollensystem ist dagegen fest installiert und muss nur einmal bei der Aufheizung des Ofens komplett erhitzt werden. Anschließend muss nur noch die Energie zugeführt werden, die zur Aufrechterhaltung der Temperatur der erhitzten Rollen notwendig ist. Insgesamt werden so zumindest 50 Gew.-% der Masse eingespart, die bei einer Keramisierung auf Keramisierungstemperaturen gebracht werden muss, was eine deutliche Zeit- und vor allem auch Kostenersparnis mit sich bringt. Darüber hinaus ist die Einsparung des Prozessschritts "Aufheizen der Trägerplatten" und die Einsparung von mindestens einem Aggregat möglich. Zusammengefasst ergibt sich also eine erhebliche Energie-, Zeit- und damit eine Kostenersparnis.

Auch gegenüber einer Keramisierung auf einem Bad aus geschmolzenen Metall, z.B. einem Floatbad aus Zinn, zeigt das erfindungsgemäße Verfahren deutliche Vorteile. So ist keine Sonderatmosphäre während der Keramisierung notwendig, was erhebliche Kostenvorteile mit sich bringt. Darüber hinaus wird eine Kontaminierung der auf dem Floatbad aufliegenden Seite des Grünglases vermieden. Eine solche Kontaminierung kann, insbesondere bei den erfindungsgemäß vorgesehenen hohen Maximaltemperaturen, zu einer nur schwer oder nicht mehr kontrollierbaren Keramisierung führen, da der Kristallisationsvorgang exotherm verläuft. Daher wäre die Lagerung des Grünglases auf einem Floatbad bei schneller Keramisierung zumindest mit großen Schwierigkeiten in Bezug auf die Prozesskontrolle verbunden oder würde diese sogar unmöglich machen.

Gemäß einer Weiterbildung der Erfindung sind die Rollen der Transportvorrichtung so zueinander beabstandet, dass bei einer vorgesehenen Vorschubgeschwindigkeit und einer durch die vorherrschenden Temperaturen und den Keramisierungsgrad induzierten Viskosität des zu keramisierenden Bereichs des Grünglases nur eine geringfügige Welligkeit des Produkts entsteht. Diese geringfügige Welligkeit beträgt maximal 100 $\mu$m, bevorzugt sogar maximal 50 $\mu$m, gemessen als Höhendifferenz zwischen einem Wellental und einem benachbarten Wellenberg, wobei die Welligkeit periodisch ist und eine Vorzugsrichtung aufweist. Die Vorzugsrichtung wird dabei durch die Laufrichtung der Platte, beziehungsweise des Bands auf den Rollen bestimmt. Eine nur geringfügige Welligkeit, die vorzugsweise für das Auge nicht oder kaum wahrnehmbar ist, ermöglicht den Einsatz der mit diesem Verfahren hergestellten Produkte in Bereichen, in denen eine plane Oberfläche Voraussetzung ist, also beispielsweise als Sichtscheibe, Fassadenplatte oder glaskeramische Herdplatte. So hergestellte Produkte sind generell als Ersatz für Keramiken und Hochleistungskeramiken geeignet. Hochleistungskeramiken werden dort eingesetzt, wo hohe Anforderungen an zumindest einen der Faktoren Temperaturbelastbarkeit, Verschleißfestigkeit, Thermoschockfestigkeit und elektrische Isolationsfähigkeit gestellt werden. Einsatzgebiete sind unter anderem Lagerelemente, Dichtungselemente, Kolben- und Ventilelemente, Düsen, Präge- und Formwerkzeuge.

Grundsätzlich setzt sich eine für das Auge deutlich sichtbare Welligkeit aus zwei Parametern zusammen. Zum einen ist die Amplitude, wie oben beschrieben, maßgeblich. Allerdings hängt die Sichtbarkeit dieser Amplitude direkt mit der Wellenlänge der Welligkeit zusammen. Verallgemeinernd kann gesagt werden, dass je größer die Wellenlänge der Welligkeit, desto größer kann auch die Amplitude der Welligkeit sein, ohne dass diese vom Auge wahrgenommen wird. Eine für das Auge sichtbare Welligkeit ist beispielsweise bei Amplituden größer als 50 $\mu$m in Verbindung mit Wellenlängen von kleiner als 135 mm gegeben. Solche Welligkeiten sind, wenn ebene Artikel verlangt werden, nicht mehr akzeptabel.

Überraschender Weise hat sich jedoch auch eine gewisse Mindestwelligkeit des hergestellten Artikels als äußerst nützlich erwiesen. Eine Mindestwelligkeit, bei der die Höhendifferenz zwischen einem Wellental und einem benachbarten Wellenberg zumindest 1 $\mu$m, vorzugsweise zumindest 5 $\mu$m beträgt, erleichtert allgemein die Handhabung der hergestellten Artikel, insbesondere wenn es sich um größere Platten handelt. Glaskeramik-Artikel reagieren allgemein sehr empfindlich auf jede Verletzungen ihrer Oberfläche, die zu Einbußen in den mechanischen Eigenschaften wie z.B. ihrer Festigkeit führen, aber auch ihre chemischen Beständigkeit reduzieren.

Eine geringfügige Welligkeit, insbesondere wenn die Welligkeit wie erfindungsgemäß vorgesehen eine Vorzugsrichtung aufweist, verringert die Oberfläche und somit die Bereiche, die bei unachtsamer Handhabung des Artikels, beispielsweise bei der Verpackung, verkratzt werden können. Vorteilhaft können z.B. Glaskeramik-Platten so übereinander gestapelt werden, dass aufgrund der Vorzugsrichtung der Mindestwelligkeit nur Punktkontakte zwischen den einzelnen Platten bestehen. Somit ist die Gefahr eines Verkratzens der Glaskeramik-Platten deutlich verringert.

Unter einer periodischen Welligkeit wird erfindungsgemäß verstanden, dass mehrere Wellentäler, jeweils gefolgt von Wellenbergen, aufeinander folgen. Je ein Wellenberg und ein darauf folgendes Wellental werden als ein Zyklus verstanden. Das Wort periodisch bedeutet also im weitesten Sinne "zyklisch", wobei die Zyklizität nicht regelmäßig sein muss. Vorzugsweise weichen die Wellenlängen eines Artikels jedoch um maximal 30% von einem Durchschnittswert ab.

Eine Vorzugsrichtung in der Welligkeit beschreibt die Tatsache, dass sich lang gezogene Wellenkämme und lang gezogene Wellentäler ausbilden. Der Begriff Vorzugsrichtung wird im Rahmen dieser Erfindung hauptsächlich verwendet, um einen Gegensatz zu großflächigen Hügeln oder Dellen, die keine Vorzugsrichtung aufweisen und über den gesamten Glaskeramik-Artikel verlaufen können, darzustellen. Erfindungsgemäß sind diese Einzelstrukturen, die den gesamten Glaskeramik-Artikel umfassen können, nicht ausgeschlossen. Sie werden jedoch von der wesentlich kurzwelligeren periodischen Welligkeit überlagert.

Gemäß einer bevorzugten Weiterbildung der Erfindung liegen die Wellenlängen der Welligkeit zwischen 50 und 500 mm, bevorzugt zwischen 60 und 200 mm.

Abgesehen von beidseitig glatten Oberflächen eines erfindungsgemäßen Glaskeramik-Artikels in Form einer Platte sind auch genoppte Oberflächen mit diesem Verfahren herstellbar. Die Oberflächenstrukturierung findet dann bei oder direkt im Anschluss an die Formgebung des Grünglases statt. Allerdings werden genoppte Oberflächen häufig ausschließlich deshalb erzeugt, um schädigende und Festigkeits-mindernde Einflüsse lokal auf die Noppenspitzen zu beschränken. Dadurch erreichen diese schädigenden Einflüsse nahezu kaum ein kritisches Niveau, d.h. die Glaskeramikeigenschaft Festigkeit wird durch sie nicht negative beeinflusst, solange die Schädigungen nur die Noppenspitzen betreffen. Unerwünschte Deformationen des keramisierenden Grünglases sind hauptsächlich auf Temperaturgradienten in vertikaler Richtung zurückzuführen. Sie initiieren einen temporär asymmetrischen Schrumpf der Ober- und Unterseite des zu keramisierenden Materials, wobei auch der Viskositätsanstieg von Ober- und Unterseite zeitversetzt stattfindet. Da die fortschreitende Kristallisation auch zu einem steilen Anstieg in der Viskosität führt, sind große Verformungen im Anschluss kaum noch wieder zu beheben. Es bleibt meist nur eine Nachbehandlung der keramisierten Artikel durch abtragende Verfahren, die jedoch den Nachteil einer Oberflächenverletzung aufweisen und zudem sehr kostenintensiv sind. So erzeugte Artikel haben deutlich schlechtere mechanische und chemische Eigenschaften als Artikel, die keiner Nachbearbeitung bedürfen.

Zusammenfassend lässt sich also sagen, dass auch genoppte Oberflächen mit dem erfindungsgemäßen Verfahren herstellbar sind.

Neben glatten und genoppten Oberflächen, sind mit dem erfindungsgemäßen Verfahren transparente, transluzente, ungefärbte und volumengefärbte sowie opake Glaskeramik-Artikel herstellbar. Transparente Glaskeramik-Artikel sind im Allgemeinen durch eine Kristallhauptphase aus Hochquarz-Mischkristallen, transluzente bis opake Glaskeramiken durch eine Hauptkristallphase aus Keatit-Mischkristallen gekennzeichnet. Unter einer Hauptkristallphase wird im Rahmen dieser Erfindung ein Kristallgehalt von zumindest 60% am Gesamtkristallgehalt verstanden.

In einer Weiterbildung der Erfindung wird die Ausbildung einer ebenen oder planen Oberfläche durch eine möglichst hohe Temperaturhomogenität innerhalb des zu keramisierenden Grünglasbandes unterstützt. Diese Weiterbildung sieht vor, dass die Temperatur über die Breite des zu keramisierenden Grünglases $T_y$ im Ofen nicht mehr als -5°C bis +5°C von einer vorgegebenen Solltemperatur $T_x$ abweicht. Anders ausgedrückt bedeutet das, dass insbesondere kurz vor und während der Volumenkristallisation und damit im Allgemeinen in dem Zeitraum der geringsten Viskosität des keramisierenden Grünglases der Temperaturunterschied über die Breite des zu keramisierenden Grünglases im Ofen weniger als 10°C, bevorzugt kleiner als 5°C und besonders bevorzugt kleiner als 3°C beträgt.

Daher wird vorteilhaft auch die Temperaturhomogenität zwischen Ober- und Unterseite des zu keramisierenden Grünglases gesteuert, so dass der Temperaturunterschied zwischen Ober- und Unterseite des Glases im Ofen in einem Bereich zwischen -0.5°C bis +1°C liegt. Diese Steuerung ist insbesondere in Bezug auf die möglichst ebene bzw. plane Ausbildung des keramisierten Artikels und zur Vermeidung von Keramisierungsspannungen wichtig, da unterschiedliche Temperaturen zu unterschiedlichen Volumenausdehnungen des heißen Materials führen können. Unterschiedliche Volumenausdehnungen begünstigen wiederum neben der Ausbildung von Welligkeiten nachteilige oder sogar inakzeptable Aufwölbungen der Platten, wie beispielsweise das Hochstehen ihrer Ecken oder die Aufwölbung ihres Mittenbereiches.

Da der Vorgang der Kristallisation exotherm verläuft und erfindungsgemäß vergleichsweise hohe Maximaltemperaturen

zur schnellen Keramisierung verwendet werden, ist das Sicherstellen einer ausgeglichenen Temperaturverteilung über das keramisierende Grünglas nicht trivial. Eine gesteuerte Keramisierung ist unter diesen Umständen nur mittels einer Heizvorrichtung, die eine sehr gleichmäßige Wärmeverteilung erzeugt, und mit extrem leistungsfähigen Temperaturfühlern möglich, die innerhalb von Sekunden Temperaturveränderungen durch exotherme Vorgänge an eine Mess- und Regeleinheit melden. Diese Mess- und Regeleinheit muss dann innerhalb kürzester Zeit die Temperaturführung anpassen, da sonst die Kontrolle über den Keramisierungsgrad und damit die Qualität des Artikels verloren geht. Zu diesem Zweck sieht eine Vorrichtung zur Ausführung des Verfahrens eine Mess- und Regeleinrichtung vor, die die Temperaturführung anhand von aktuellen Messwerten und Sollvorgaben steuert. Eine Reaktion der Mess- und Regeleinrichtung auf veränderte Bedingungen ist erfindungsgemäß im Allgemeinen innerhalb von 10 Sekunden, in günstigsten Fällen sogar innerhalb von einer Sekunde möglich.

Ein solche Mess- und Regeleinrichtung kann beispielsweise aus Temperaturfühlern, die mit einem Computer verbunden sind und einer Temperatursteuereinrichtung, die ebenfalls mit dem Computer verbunden ist, bestehen.

Die Heizvorrichtung, die eine sehr homogene Wärmeverteilung erzeugt, kann beispielsweise aus dem Fachmann bekannten Heizstäben bestehen, die in regelmäßigen Abständen zueinander angeordnet sind und bevorzugt zumindest 10 cm über die Ränder des zu keramisierenden Grünglases herausragen. Der Überstand der Heizstäbe über die Ränder des Grünglases ist sinnvoll, um auch im Randbereich des Grünglases eine homogene Temperaturverteilung zu erzielen.

Um eine schnelle Temperaturveränderung zu erreichen mit der die Keramisierung des Grünglases effektiv gesteuert werden kann, ist es darüber hinaus sinnvoll, die Wandung des Ofenbereichs, in dem die Volumenkeramisierung stattfindet, wärmeleitend auszubilden. Dies mag überraschend erscheinen, da im Allgemeinen eine möglichst gute Wärmeisolierung von Öfen zur Verminderung von Heizkosten erreicht werden soll. In diesem Fall ist eine gute Wärmeisolierung zumindest der Kammer, beziehungsweise dem jeweiligen Ofensegment, in der die Volumenkristallisation stattfindet, kontraproduktiv. Eine schnell ansprechende Temperatursteuerung setzt voraus, dass Wärme relativ schnell aus der Kammer beziehungsweise dem jeweiligen Ofensegment abgeführt werden kann. Daher ist gemäß einer besonders bevorzugten Weiterbildung der Erfindung eine wenig oder gar nicht isolierte Kammer für die Durchführung der Volumenkristallisation vorgesehen.

Gemäß einer weiteren Weiterbildung der Erfindung hat das zu keramisierende Grünglas und/oder das keramisierte Produkt eine Zusammensetzung aus dem Bereich:

| | | |
|---|---|---|
| 60 - 73,0 | Gew.-% | $SiO_2$, |
| 15 - 25,0 | Gew.-% | $Al_2O_3$, |
| 2,0 - 5,0 | Gew.-% | $Li_2O$, |
| 0 - 5,0 | Gew.-% | $CaO + SrO + BaO$, |
| 0 - 5,0 | Gew.-% | $TiO_2$, |
| 0 - 5,0 | Gew.-% | $ZrO_2$, |
| 0 - 4,0 | Gew.-% | $ZnO$ |
| 0 - 3,0 | Gew.-% | $Sb_2O_3$, |
| 0 - 3,0 | Gew.-% | $MgO$, |
| 0 - 3,0 | Gew.-% | $SnO_2$ |
| 0 - 2,0 | Gew.-% | $P_2O_5$, |
| 0 - 1,5 | Gew.-% | $As_2O_3$, |
| 0 - 1,2 | Gew.-% | $Na_2O + K_2O$, wobei die jeweiligen Anteile vorzugsweise innerhalb der nachfolgend angegebenen Bereiche liegen, |
| 0 - 1,0 | Gew.-% | $Na_2O$, |
| 0 - 0,5 | Gew.-% | $K_2O$. |

Generell ist jedoch anzumerken, dass das Verfahren auf einen weiten Zusammensetzungsbereich anwendbar ist. So können beispielsweise auch Glaskeramik-Zusammensetzungen aus Umschmelzphasen hergestellt werden. Hier können dann auch Komponenten des oben angegebenen Zusammensetzungsbereiches vollständig fehlen.

In einer Weiterbildung des Verfahrens wird nach der Volumenkristallisation und einer optionalen Reifephase bei einer Maximaltemperatur ein schnelle Abkühlung auf unter 600°C durchgeführt, wobei die Kühlrate zumindest zeitweise mindestens 5°C/min., bevorzugt zwischen 10 und 20°C/min. beträgt.

Bevorzugt liegt die Vorschubgeschwindigkeit zwischen 0,5 und 5 m/min. Schnelle Vorschubgeschwindigkeiten verringern die Gefahr des Durchsackens des niedrigviskosen Materials.

Die Wechselwirkung mit der Atmosphäre, die während der Volumenkristallisation oder Keramisierung im Ofen herrscht, kann bei dem bisher skizzierten Verfahren lokal uneingeschränkt und vollständig ungehindert stattfinden. Dies führt vorteilhafter Weise zur Ausbildung eines im Wesentlichen glasigen Randbereichs, der einen im Wesentlichen kristallinen Innenbereich vollständig oder zumindest teilweise umschließt. Die Dicke der glasigen Schicht oder des glasigen Randbereichs liegt dabei typischerweise im Bereich von 50 bis 5000 Nanometern, meistens 250 bis 3000, vorzugsweise im Bereich von 300 bis 1500 Nanometern.

Der im Wesentlichen glasige Randbereich oder die im Wesentlichen glasige Randschicht, umfasst dabei maximal 10 Gew.-% Kristalle, d.h. mindestens 90 Gew.-% des Randbereichs bestehen aus einer glasigen Matrix. Besonders bevorzugt umfasst der glasige Randbereich weniger als 1 Gew.-% Kristalle. Im Gegensatz dazu haben Kristalle an dem im Wesentlichen kristallinen Innenbereich des Glaskeramik-Artikels einen Anteil von mindestens 50 Gew.-%, bevorzugt von mindestens 80 Gew.-%, besonders bevorzugt mindestens 90 Gew.-%. Als Nachweisverfahren dient hier die Röntgendiffraktometrie.

Bei transparenten Glaskeramik-Artikeln erhöht ein solcher glasiger Randbereich die Lichttransmission bzw. Transparenz um bis zu 1% absolut verglichen mit einem Glaskeramik-Artikel, der keinen glasigen Randbereich aufweist. Aber auch transluzente oder opake Glaskeramiken profitieren von der Ausbildung einer glasigen Schicht durch eine verbesserte mechanische Festigkeit und chemische Resistenz.

Gerade die Möglichkeit eines beidseitig wirkenden Atmosphärenkontaktes, die das Rollentransportsystem auf dem auch direkt keramisiert wird, bietet, hat sich für die Ausbildung eines solchen glasigen Randbereichs als besonders vorteilhaft erwiesen. Die Lagerung auf Rollen hat zur Folge, dass auch die auf den Rollen aufliegende Unterseite des Grünglases fast durchgängig Atmosphären-Kontakt hat. Daher bildet sich auch hier ein gleichmäßiger glasiger Randbereich aus, so dass eine Dickentoleranz entlang der jeweiligen Fläche der Ober- bzw. Unterseite von vorzugsweise höchsten 10% der mittleren Schichtdicke gewährleistet ist. Insbesondere an der Unterseite des keramisierten Produkts ist eine solche homogene Schichtdicke des glasigen Randbereichs bei der Keramisierung auf Trägerplatten oder auf einem Sn-Floatbad nicht erreichbar.

Gemäß einer bevorzugten Weiterbildung der Erfindung enthalten die Rollenoberflächen vorzugsweise zumindest eines der Materialien umfassend Siliziumkarbid, Siliziumoxid, Korund oder Mischungen aus dem System Schmelz-/Sinter-Mullit - Sillimantin, Borcarbid und Bornitrid. Diese Materialien sind hinreichend hitzestabil und auf derartigen Rollen hergestellten Glaskeramiken zeigen überraschend ähnliche Verletzungs- und Defekt-freie Oberflächen wie Glaskeramiken des gleichen Typs, die auf Trägerplatten hergestellt wurden, deren Oberflächen dafür speziell konditioniert wurden.

Um eine gute Wärmezufuhr von unten zu gewährleisten, sollte vorzugsweise ein Verhältnis zwischen Rollendurchmesser $d_{Rolle}$ und Rollenlänge $l_{Rolle}$ von $0,25 < d_{Rolle}/l_{Rolle} < 0,9$ eingehalten werden. Besonders bevorzugt beträgt dieses Verhältnis 0,5.

Eine weitere vorteilhafte Ausführungsform der Erfindung sieht bei der Keramisierung von vereinzelten Grünglasplatten vor, die Grünglasplatten schräg auf die Transporteinrichtung, also die Rollen, aufzubringen oder aufzulegen, so dass eine ihrer Ecken der restlichen Platte voraus läuft. Mit einer solchen Anordnung wird erreicht, dass der nicht durch Rollen unterstützte Anfangs- oder Endbereich einer Platte mit verringerter Viskosität im Vergleich zu einer "geraden", herkömmlichen Anordnung der Platte verringert wird. Damit wird auch der nicht unterstützte Gewichtsanteil der Platte beim Übergang zwischen zwei benachbarten Rollen verringert. Mithilfe dieser Anordnung soll vermieden werden, dass die in Vorschubrichtung vordere Kante der Platte, die sich infolge der verringerten Viskosität und des nicht unterstützten Eigengewichts nach unten senken kann, an die nächste Rolle stößt und dabei beschädigt und deformiert wird. Gleichzeitig erfährt der Endbereich der Platte weniger Biegung nach unten, weil auch hier die nicht unterstützte Masse beim Übergang zwischen zwei Platten verringert ist.

Eine Vorrichtung zur Ausführung des erfindungsgemäßen Verfahrens umfasst vorzugsweise eine Einrichtung, die das zu keramisierende Grünglas bereitstellt. Insbesondere ist dabei an eine Vorrichtung zum Erschmelzen und Formen des Grünglases gedacht an die sich die erfindungsgemäße Vorrichtung zum Keramisieren direkt anschließt. Es ist jedoch auch möglich, dass bereits vereinzelte Grünglasplatten durch ein geeignetes Aufgabesystem kontinuierlich angeliefert werden.

Des Weiteren ist ein Durchlaufofen zum Keramisieren des Grünglases vorgesehen, wobei der Durchlaufofen dazu eingerichtet ist, den gesamten Keramisierungsprozess innerhalb von 0,5 bis 4 Stunden durchzuführen. Zumindest eine Kammer des Durchlaufofens ist für die Volumenkristallisation des Grünglases eingerichtet und weist Einrichtungen auf, die das getrennte Erhitzen einer Ober- und einer Unterseite des zu keramisierenden Grünglases auf 750 bis 1250°C erlaubt. Darüber hinaus verfügt dieser Bereich des Ofens über eine Mess- und Regeleinrichtung, die zum einen die Steuerung der gesamten Vorrichtung übernehmen kann, zum anderen jedoch vor allem dazu eingerichtet ist, Temperaturveränderungen an Ober- und Unterseite des keramisierenden Grünglases innerhalb von wenigen Sekunden wahrzunehmen und die Temperatursteuerung des Ofens innerhalb von im günstigsten Fall einer Sekunde entsprechend anzupassen. Diese schnelle Reaktionszeit ist notwendig, um eine effektive Kontrolle über den exothermen Keramisierungsprozess zu gewährleisten.

Der Durchlaufofen verfügt zudem über eine Transporteinrichtung, die zumindest in dem Ofenbereich, in dem die Volumenkristallisation stattfindet, Rollen zum Transportieren und/oder Lagern des Grünglases umfasst, wobei eine Vorschubgeschwindigkeit zwischen 0,2 und 10 m/min. und bevorzugt zwischen 0,5 und 5 m/min. realisiert werden kann.

Die Mess- und Regeleinrichtung ist eingerichtet, die Temperatur und/oder die Vorschubgeschwindigkeit so zu regeln, dass bezüglich des Abstands $x_{Rolle}$ der Rollenachsen gilt:

$$x_{Rolle}{}^5 \leq 360 * (R_a * t_{Scheibe}{}^2)/(\rho * g) * v_{Vorschub} * \eta,$$

wobei $R_a$ die maximale Welligkeit, $t_{Scheibe}$ die Glasdicke, $\rho$ die Glasdichte, $g$ die Erdbeschleunigung, $v_{Vorschub}$ die Vorschubgeschwindigkeit und $\eta$ die minimale Viskosität des Glases im Verlauf der Keramisierung sind.

Die Vorrichtung ist derart zur Temperaturregelung ausgebildet, dass die Temperatur im Ofen über eine Breite des zu keramisierenden Grünglases $T_y$ nicht mehr als -5°C bis +5°C von einer vorgegebenen Solltemperatur $T_x$ abweicht, dass der Temperaturunterschied zwischen Ober- und Unterseite des zu keramisierenden Grünglases im Ofen in einem Bereich zwischen -0.5°C bis +1°C liegt und dass die Mess- und Regeleinrichtung zu einer innerhalb von zehn Sekunden erfolgenden Reaktion ausgebildet ist.

Gemäß einer Weiterbildung der Erfindung weisen die Rollenachsen einen Abstand von minimal dem Durchmesser der Rollen plus 0,2 cm und maximal dem Durchmesser der Rollen plus 10 cm zumindest in dem Bereich auf, in dem die Volumenkristallisation oder Keramisierung stattfindet. Damit wird ein guter Temperaturaustausch an der Unterseite der Platten und damit auch eine gute Regelung der Temperatur ermöglicht.

Darüber hinaus können Rollen, die in identischen Abständen nebeneinander angeordnet sind, eine periodisch auftretende Welligkeit im Endprodukt verstärken bzw. aperiodische Abstände zwischen den Rollenmittelpunkten können die Welligkeit des Endprodukts reduzieren. Gemäß einer vorteilhaften Weiterbildung der Erfindung weist daher eine Transporteinheit mit variablen oder in aperiodischen Abständen angeordneten Rollen auf, wobei die Abstände und der Durchmesser der Rollen so dimensioniert sind, dass das "Durchsacken" des zu keramisierenden Grünglasbandes verhindert wird.

Die Rollen können auch derart angeordnet sein, dass sich ihre Abstände nicht regelmäßig wiederholen. Der Begriff "aperiodische Anordnung" umfasst jedoch auch Anordnungen, in denen sich bestimmte Gruppen von Rollenabständen wiederholen. Eine solche Anordnung wäre beispielsweise bei einer Rollenabstandsfolge 8 cm, 12 cm, 8 cm, 12 cm, usw. gegeben.

Gemäß noch einer Weiterbildung der Erfindung kann während der Keramisierung die Vorschubgeschwindigkeit erhöht werden. Dazu können die Rollen in Richtung entlang der Vorschubrichtung sukzessive schneller laufen, beziehungsweise angetrieben werden. Der beschleunigte Vorschub bewirkt eine Reckung der Platte, so dass das Durchhängen der Platte zwischen den Rollen vermindert bzw. korrigiert wird.

Glaskeramik-Artikel, die mittels des erfindungsgemäßen Verfahrens herstellbar sind, können als Scheiben, insbesondere Fahrzeugsichtscheiben, Kaminsichtscheiben oder Kochfläche, Kochgeschirr im Allgemeinen oder für Fassadenverkleidungen verwendet werden. Sie lassen sich jedoch generell auch als Ersatz für Hochleistungskeramiken einsetzen.

Im Folgenden wird die Erfindung anhand von Ausführungsbeispielen näher erläutert. Gleiche Bezugszeichen in den unterschiedlichen Figuren bezeichnen gleiche oder ähnliche Merkmale. Es zeigen:

Fig. 1a      Eine schematisierte, typische Vorrichtung, mit der das erfindungsgemäße Verfahren durchgeführt werden kann;

Fig. 1b      eine Darstellung eines typischen Temperatur-Zeit-Profils für ein erfindungsgemäßes Verfahren;

Fig. 2a, b:      die Verformung an drei verschiedenen Stellen einer keramisierenden Platte während des Transports über ein Rollensystem bei einer sich nicht verändernden Viskosität,

Fig. 3      den Einfluss unterschiedlicher minimaler Viskositäten direkt vor und zur Beginn der Volumenkristallisation auf die Verformung eines keramisierten Artikels,

Fig. 4:     die Welligkeit einer keramisierenden Grünglasplatte in Abhängigkeit vom Rollenabstand, aufgetragen gegen die Plattenlängsposition,

Fig. 5:     die Auswirkungen von periodischen und aperiodischen Rollenabständen auf die Welligkeit des Glaskeramik-Artikels,

Fig. 6:     den Einfluss der Vorschubgeschwindigkeit auf die Verformung des Glaskeramik-Artikels,

Fig. 7      den Einfluss eines beschleunigten Vorschubs auf die Verformung des Glaskeramik-Artikels,

Fig. 8      den Einfluss der Länge des zu keramisierenden Grünglases auf die Welligkeit des keramisierten Artikels.

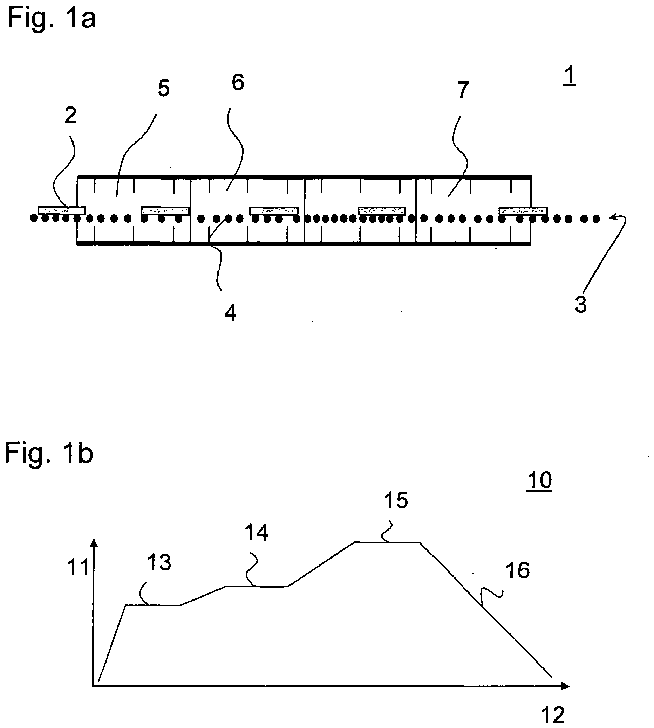

Figur 1a zeigt schematisch eine typische Vorrichtung 1 und Fig. 1b dazu ein typisches, beispielhaftes Temperatur-ZeitProfil 10, mittels dem ein erfindungsmäßes Keramisierungsverfahren durchgeführt werden kann. Das erfindungsgemäße Verfahren zur kontinuierlichen Keramisierung von Grünglas 2 zeichnet sich durch eine Keramisierung direkt auf einem Rollentransportsystem 3 aus, wobei sehr kurze Keramisierungsdauern von nur 0,5 bis 4 Stunden vorgesehen sind. Eine solche Kombination ist zur Herstellung von qualitativ hochwertigen Produkten nur dann möglich, wenn die Parameter, die Einfluss auf die Ebenheit des Produkts haben, sehr genau bestimmt und insbesondere aufeinander abgestimmt sind. Die Temperaturführung hat beispielsweise entscheidenden Einfluss auf die Viskosität des keramisierenden Grünglases 2. Um die Temperatur zu steuern, ragen bei dem in Fig. 1a gezeigten Beispiel Thermoelemente 8 in den Ofen hinein. Dabei werden zur Herstellung einer möglichst geringen Temperaturdifferenz zwischen Ober- und Unterseite des Grünglases Thermoelemente sowohl ober-, als auch unterhalb des Grünglases angeordnet. Die Viskosität in Zusammenhang mit der Grünglasdicke bestimmt, wie groß die Zwischenräume zwischen den einzelnen Rollen 4 des Transportsystems 3 sein dürfen, damit das niedrigviskose Grünglas 2 nicht zwischen den einzelnen Rollen 4 durchsackt und eine nicht erwünschte Welligkeit im Endprodukt erzeugt.

Der in Fig. 1a dargestellte Rollenofen 1 soll nur als ein mögliches Beispiel für eine Vorrichtung dienen mit der das erfindungsgemäße Verfahren, das sich im eigentlichen Sinne nur auf den Zeitraum kurz vor der Volumenkristallisation und den Zeitraum der Volumenkristallisation selber bezieht, durchgeführt werden kann. Typischer Weise findet die Keimbildung in einer oder mehreren Kammern 5, die Volumenkristallisation in 2 bis 3 Kammern 6 statt, während 4 bis 6 Kammern 7 der Kühlung des keramisierten Grünglases 2 am Ende des Verfahrens dienen.

Ebenso ist auch das in Fig. 1b dargestellte Temperatur-Zeit-Profil 10 nur als schematisches Beispiel aufzufassen, weshalb auch keine absoluten Werte angegeben sind. Temperatur 11 und Zeit 12 sind als Funktion eines speziellen Verfahrens zu verstehen, das nicht Thema dieser Anmeldung ist, sondern nur in Form von begrenzenden Rahmenparametern, wie z.B. Gesamtzeit oder Maximaltemperaturen, in diese eingeht. Darüber hinaus sind die einzelnen Phasen eines typischen Keramisierungsprogramms, nämlich Keimbildung 13, Volumenkristallisation 14, Reifephase 15 und Abkühlung 16 dargestellt. Die Aufheizphase zu Beginn des Prozesses wird im Allgemeinen nicht benötigt, sofern ein Glasband direkt im Anschluss an den Heißformgebungsprozess keramisiert wird und ausreichend Restwärme vorhanden ist.

Im Folgenden wird anhand von Beispielen der Einfluss einzelner Parameter wie Viskosität, Rollenabstand, Vorschubgeschwindigkeit usw. kurz vor und während der Volumenkristallisation 14 auf die Ebenheit und damit die Qualität eines Glaskeramik-Artikels beschrieben. Die Ebenheit bzw. Welligkeit des erzeugten Glaskeramik-Artikels ist im Hinblick auf die direkt auf einem Rollentransportsystem 3 erfolgende Keramisierung ein wesentliches Merkmal der Erfindung.

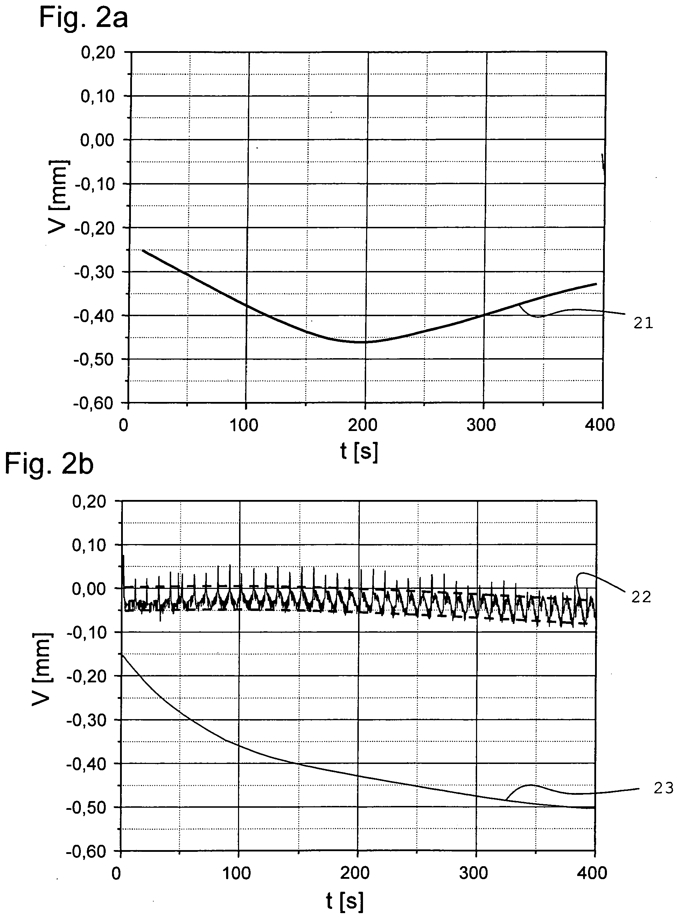

Die Fig. 2a und 2b zeigen die Verformung (Abweichung von einem Ausgangswert) eine keramisierenden Grünglasbandes 2 in Gestalt einer langen Scheibe, das über ein Rollensystem 3 transportiert wird, dargestellt in Abhängigkeit von der Zeit t in Sekunden. Die Verformung V ist in Millimetern angegeben. Die Verformung gegen die Zeit ist anhand von drei exemplarisch ausgewählten Punkten gezeigt. Punkt 1 beschreibt eine Stelle am Plattenanfang, Punkt 2 beschreibt eine Stelle am Plattenende und Punkt 3 beschreibt eine Stelle in der Plattenmitte.

Die transportierte Scheibe ist 5 m lang und 4 mm dick. Die Viskosität des Bands beträgt etwa $10^9$ Pa·s und verändert sich mit der Zeit nicht. Die Rollen des Transportsystems weisen einen Durchmesser von 5 cm auf und sind in regelmäßigen Abständen der Rollenmittelpunkte von 10 cm angeordnet. Die Vorschubgeschwindigkeit beträgt 60 cm/min.

Die Kurven 21, 22 und 23 in den Fig. 2a und 2b beschreiben die Verformung von drei exemplarischen Punkten auf einem Glasband gegen die Zeit. In Fig. 2a, Kurve 21 und in Fig. 2b, Kurve 23 sind der Übersicht wegen nur die Einhüllenden der oszillierenden Kurven dargestellt.

Fig. 2a zeigt die Einhüllende 21 der Bewegungskurve eines Punktes, der in Transportrichtung des Bandes vorne, beziehungsweise am Plattenanfang liegt.

Die Einhüllende 21 zeigt nach etwa 200 Sekunden eine maximale Amplitude an, die dann zum Ende des Zeitraums wieder leicht abnimmt. Insgesamt zeigt sich etwa nach der Hälfte der Zeit eine Tendenz zu einer Bewegung dieses mittleren Bereichs des Bandes nach oben, so dass nach 400 Sekunden dieser Bereich des Bandes wieder eine geringere Welligkeit aufweist.

Fig. 2b zeigt in Kurve 22 eine detaillierte Aufzeichnung der Bewegung eines in der Mitte des Bands befindlichen Punkts, wobei jeder Ausschlag der Kurve 22 nach oben mit dem Aufrollen dieses Punktes auf eine Rolle 3 korrespondiert, während jeder Ausschlag nach unten die Bewegung des Bandes an der Stelle des Punkts zwischen zwei benachbarten Rollen aufzeichnet. Der Ausschlag nach unten zeichnet also nach, wie sich das Band beim "Herunterrollen" von einer Rolle auf dem Weg zur benachbarten Rolle auf Grund der geringen Viskosität und einwirkenden Erdanziehung nach unten bewegt. Die obere und untere Einhüllende der Kurve 22 ist jeweils als gestrichelte Linie gezeichnet.

Die Einhüllende der Kurve 22 zeigt, dass der mittlere Teil des Bandes nach 400 Sekunden eine Amplitude von 50 $\mu$m aufweist, d.h., dass das Band unter diesen Voraussetzungen eine Höhendifferenz von benachbartem Wellenberg zu Wellental von maximal 50 $\mu$m aufweist.

Figur 2b zeigt darüber hinaus noch die Einhüllende 23 der Bewegungskurve von Punkt 2, also einem Punkt der sich in Bewegungsrichtung des Bandes hinten befindet. Auf die detaillierte Darstellung des gesamten Kurvenverlaufs wurde auch hier zugunsten der Übersichtlichkeit verzichtet. Die Einhüllende 23 zeigt eine stetige Zunahme der Amplitude und damit der Welligkeit am hinteren Ende des Bandes mit dem Verlauf der Zeit. Gegen Ende des dargestellten Zeitraums nähert sich der Verlauf der Einhüllenden jedoch zunehmend einem konstanten Verlauf an. Die maximale Höhendifferenz zwischen einem Wellenberg und einem benachbarten Wellental beträgt am Ende des Glasbandes bei den genannten Voraussetzungen etwa 450 $\mu$m.

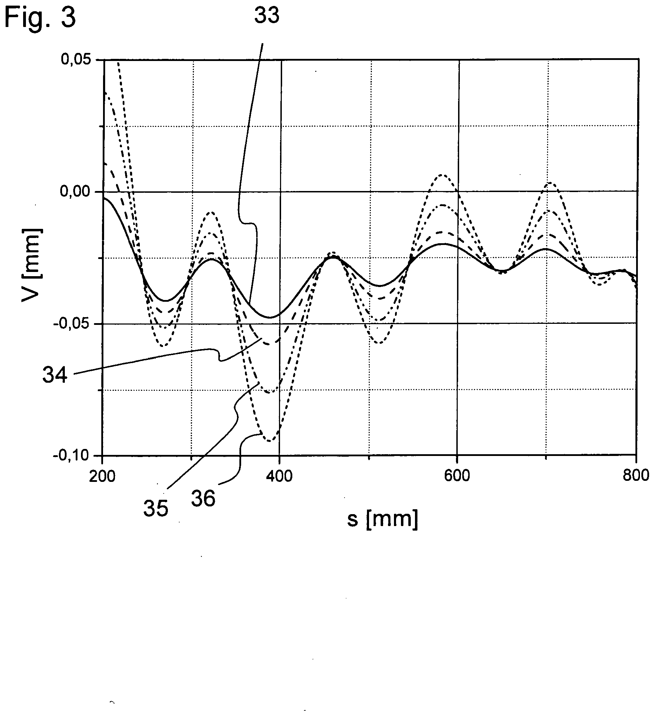

Figur 3 zeigt den Einfluss unterschiedlicher minimaler Viskositäten direkt vor und zur Beginn der Volumenkristallisation auf die Verformung eines keramisierten Artikels. Dargestellt ist die Verformung des Artikels auf der y-Achse in Abhängigkeit von der Plattenlänge, die entlang der x-Achse aufgetragen ist. Die Einheit sowohl für x- als auch für die y-Achse ist Millimeter. Null Millimeter auf der x-Achse entspricht dem in Transportrichtung hinteren Ende der Platte, 1000 mm entspricht dem vorderen Rand der Platte, in Transportrichtung betrachtet.

Die dargestellten Kurven 33, 34, 35 und 36 zeigen die gleiche Platte, die bis auf die unterschiedliche Viskosität unter gleichen Bedingungen keramisiert wurden. Die Plattenlänge beträgt 1 m, die Plattendicke 4 mm, der Rollendurchmesser 50 mm, der Rollenabstand 100 mm und die Vorschubgeschwindigkeit 60 cm/min. Die Viskositäten der Platten, die in den Kurven dargestellt sind, sind wie folgt:

| | |
|---|---|
| Kurve 33 | $10^{9,6}$ Pa·s |
| Kurve 34 | $10^{9,4}$ Pa·s |
| Kurve 35 | $10^{9,2}$ Pa·s |
| Kurve 36 | $10^{9,0}$ Pa·s. |

Die Verformungskurven 33, 34, 35, 36 zeigen, dass je niedriger die Viskosität des Grünglases in der Phase der niedrigsten Viskosität, desto stärker ist die Verformung bei sonst gleichen Parametern. Das Verhältnis zwischen der Viskosität und der Welligkeit, das sich aus diesen Daten ableiten lässt, ist linear und folgt dem Verhältnis

$$R_a/R_{a1} = \eta/\eta_1,$$

wobei $R_a$ die Welligkeit bei einer ersten Viskosität $\eta$ und $R_{a1}$ die Welligkeit bei einer zweiten Viskosität $\eta_1$ beschreibt.

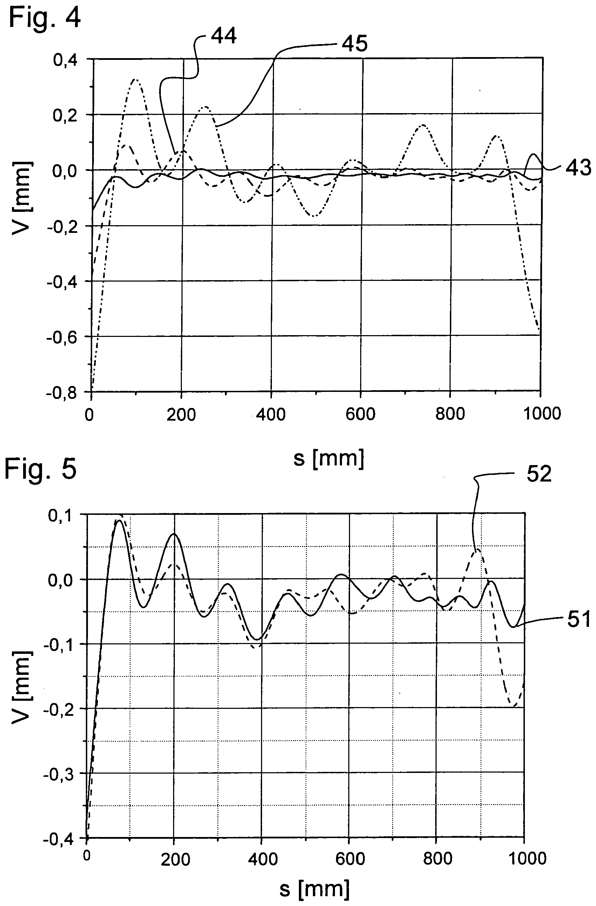

Figur 4 zeigt die Welligkeit einer keramisierenden Grünglasplatte 2 in Abhängigkeit vom Rollenabstand, aufgetragen gegen die Plattenlänge. Der Rollenabstand bezeichnet den Abstand zwischen den Rollenmittelpunkten benachbarter Rollen.

Die keramisierte Platte ist in allen dargestellten Fällen 1 m lang, 4 mm dick und weist eine Viskosität von $10^{9,0}$ Pa·s auf. Die Verformung der Platte ist auf der y-Achse, die Plattenlänge entlang der x-Achse, jeweils in Millimetern, aufgetragen. Alle Beispiele wurden auf Transportsystemen mit regelmäßigem oder periodischem Rollenabstand transportiert. Der Pollerdurchmesser beträgt bei allen Bespielen 50 mm.

Die Kurve 43 beschreibt die Verformung einer keramisierten Platte, die auf einer Transportvorrichtung 3 transportiert wurde, bei der der Rollenabstand 75 mm beträgt.

Kurve 44 beschreibt die Verformung einer keramisierten Platte, die bei Rollenabständen von 100 mm entsteht, während Kurve 45 die Verformung beschreibt, die bei Rollenabständen von 125 mm entsteht.

Es zeigt sich, dass der Rollenabstand unter sonst gleichen Bedingungen einen starken Einfluss auf die Verformung des keramisierten Artikels hat. Generell führen kleine Abstände zu geringen Verformungen, während große Abstände in einer starken Verformung resultieren. Aber nicht nur die Verformung, also die Amplitude der Kurve, verändert sich mit veränderten Abständen, sondern auch die Wellenlänge der Verformung. Mit zunehmendem Abstand der Rollenmittelpunkte zueinander nimmt auch die erzeugte Wellenlänge zu. Besonders auffällig sind die starken Verformungen am vorderen und hinteren Plattenrand, die mit zunehmendem Rollenabstand überdurchschnittlich anwachsen (vgl. Kurve 43 und 45).

Der Zusammenhang zwischen der durchschnittlichen Walligkeit, auch nur Welligkeit genannt, des Artikels und dem Rollenabstand ist hochgradig nicht-linear. Es gilt

$$R_a/R_{a1} = (x_{Rolle}/x_{Rolle1})^5 * (\eta/\eta_1),$$

wobei $R_a$ das quadratische Mittel der Abweichung von einem Mittelwert ist und die durchschnittliche Welligkeit in Mikrometern beschreibt, $x_{Rolle}$ den Abstand benachbarter Rollenmittelpunkte und $\eta$ die Viskosität bezeichnet. Der zusätzliche Index 1 bezeichnet die gleichen Parameter, jedoch bei einem anderen Rollenabstand.

Unter den gegebenen Bedingungen führt ein Rollenabstand vcn 75 mm zu einer durchschnittlichen Welligkeit von 5,28 μm, ein Rollenabstand von 100 mm zu einer Welligkeit von 22,64 μm und ein Rollenabstand von 125 mm zu einer Welligkeit von 73,03 μm.

Die Wellenlänge scheint nach derzeitigen Erkenntnissen mit einem Faktor von 1,1 bis 1,3 zum Rollenabstand zu skalieren.

Figur 5 stellt die Auswirkungen von periodischen und aperiodischen Rollenabständen auf die Verformung des Glaskeramik-Artikels dar. Auf der y-Achse ist Verformung V, entlang der x-Achse die Länge s der Platte, jeweils in Millimetern angegeben. Für die Plattenlänge, -dicke, die Viskosität und den Rollendurchmesser gelten die gleichen Werte wie in Fig. 3.

Die Kurve 51 zeigt die Verformung der Platte, die auf einem Transportsystem mit regelmäßigen Rollenabständen von 100 mm keramisiert wurde. Kurve 52 zeigt die Verformung der gleichen Platte, die auf einem Transportsystem mit unregelmäßigen Rollenabständen keramisiert wurde. Die Rollenabstände betrugen abwechselnd 80 und 120 mm, so dass sich jeweils eng beieinander stehende Paare bilden, die durch einen größeren Zwischenraum voneinander getrennt sind.

Auch hier fällt bei beiden Kurven 51, 52 wieder eine besonders starke Verformung am vorderen (1000 mm) und hinteren (0 mm) Plattenende im Vergleich zum mittleren Teil der Platte auf. Die Berechnung nach der aus Fig. 3 abgeleiteten Formel der durchschnittlichen Welligkeit des Artikels ergibt, dass die Welligkeit durch in unterschiedlichen Abständen angeordnet Rollen um etwa 2 μm verringert wird (Kurve 52). Gleichzeitig scheint die Wellenlänge im vorderen Bereich der Glasplatte bei aperiodischen Rollenabständen (Kurve 52) länger zu sein als bei periodischen Rollenabständen (Kurve 51). Im hinteren Bereich gleichen sich die Wellenlängen wieder an.

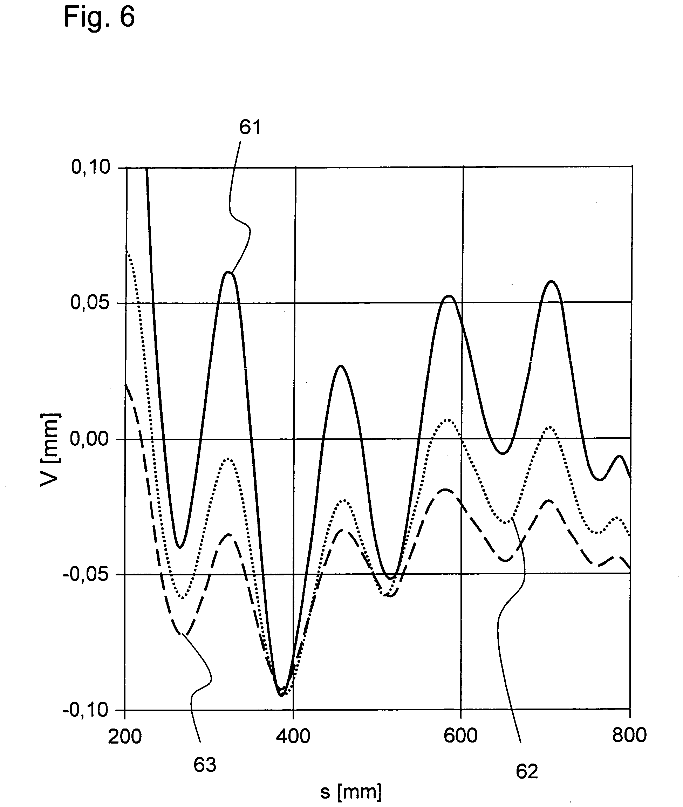

In Fig. 6 ist der Einfluss der Vorschubgeschwindigkeit auf die Verformung V des Glaskeramik-Artikels dargestellt. Die Verformung ist wiederum gegen die Plattenlänge s, jeweils in Millimetern, aufgetragen.

Die Größe der Platte, die Viskosität und der Rollendurchmesser entsprechend wiederum den Wertangaben für Fig. 3. Der Rollenabstand beträgt 100 mm. Die drei dargestellten Kurven 61, 62, 63 unterscheiden sich durch die Vorschubgeschwindigkeit mit der die Platten bei der Keramisierung transportiert wurden. Die Platte, die durch die Kurve 61 repräsentiert wird, wurde mit 30 cm/min., die Platte, die durch die Kurve 62 dargestellt wird mit 60 cm/min. und die Platte, die die Kurve 63 zeigt mit 90 cm/min. transportiert. Es zeigt sich deutlich, dass die Vorschubgeschwindigkeit einen erheblichen Einfluss auf die Höhe der Verformung, nicht jedoch auf deren Wellenlänge hat. Die am schnellsten transportierte Platte weist die geringste Verformung auf (Kurve 63). Der Zusammenhang zwischen der durchschnittlichen Welligkeit und der Vorschubgeschwindigkeit ist annähernd linear und ergibt sich aus der Gleichung

$$R_a/R_{a1} \approx (v_{Vorschub}/(v_{Vorschub1} + \Delta v_{Vorschub1})) * (\eta/\eta_1),$$

wobei $R_a$ wiederum der durchschnittlichen Welligkeit, $\eta$ der Viskosität und $v_{Vorschub}$ der Vorschubgeschwindigkeit entspricht. Der zusätzliche Index 1 bezeichnet die gleichen Parameter, jedoch für unterschiedliche Vorschubgeschwindigkeiten.

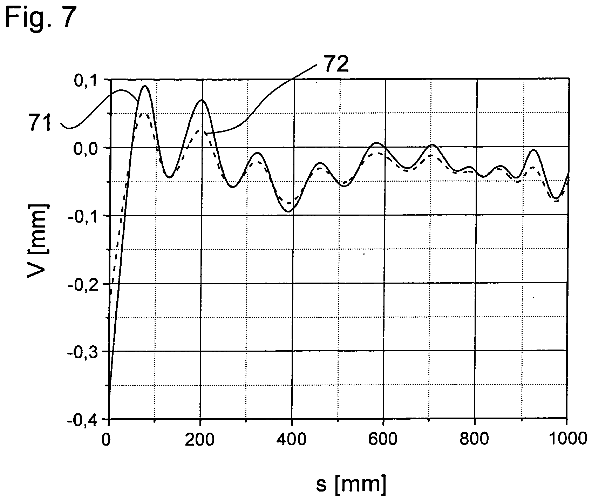

Figur 7 zeigt den Einfluss, den ein beschleunigter Vorschub während der Keramisierung auf die Verformung des bekannten Glaskeramik-Artikels hat. Es gelten wiederum die Angaben aus Fig. 3 für die Plattenmaße, die Viskosität und den Rollendurchmesser. Der Rollenabstand beträgt wiederum 100 mm. Die Verformung V der Platte ist auf der y-Achse in Millimetern, die Plattenlänge 18 entlang der x-Achse, ebenfalls in Millimetern angegeben.

Kurve 71 zeigt die Verformung einer Platte, die bei einer konstanten Vorschubgeschwindigkeit von 60 cm/min keramisiert wurde, während Kurve 72 die Verformung einer Platte, die bei zunehmender Vorschubgeschwindigkeit keramisiert wurde. Auf dem ersten Meter der 5 m langen Transportvorrichtung beträgt die Vorschubgeschwindigkeit konstant 60 cm/min. Auf den restlichen 4 m nimmt die Vorschubgeschwindigkeit kontinuierlich auf 120 cm/min zu. Die Platte wird also gleichmäßig beschleunigt.

Aus dem Vergleich der Verformungs-Kurven 71 und 72 ergibt sich, dass eine Beschleunigung des Vorschubs die Verformung der Platte insbesondere bezüglich der Amplitude verringert. Die Beschleunigung des Vorschubs scheint jedoch keinen oder nur geringen Einfluss auf die Wellenlänge der Verformung zu haben.

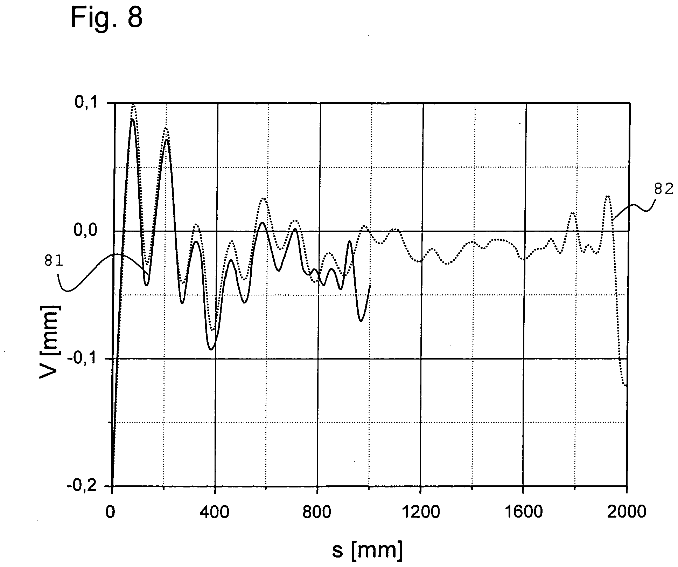

Figur 8 beschreibt den Einfluss der Länge des zu keramisierenden Grünglases auf die Welligkeit des keramisierten Artikels. Abgesehen von der Länge der Platten 18 sind alle Parameter wie Plattendicke, Rollenabstand, Rollendurchmesser, Viskosität und Vorschubgeschwindigkeit identisch und entsprechend den in der Beschreibung für Fig. 3 angegebenen Werten.

Die Verformung des Artikels ist entlang der Längsachse dargestellt. Kurve 81 zeigt die Verformung einer 1 m langen Platte, Kurve 82 die einer 2 m langen Platte. Es zeigt sich, dass bei längeren Artikeln, die hier insbesondere als Modell eines Glasbandes verstanden werden, die mittleren Bereiche, hier etwa zwischen 900 und 1800 mm, deutlich geringere Amplituden in der Verformung aufweisen. Es ist somit wahrscheinlich, dass in Form eines kontinuierlichen Glasbandes keramisierte Artikel, die erst anschließend an die Keramisierung vereinzelt werden, die Welligkeit des Artikels im Vergleich zur vereinzelt keramisierten Artikeln deutlich reduziert werden kann. Im Durchschnitt ist die Welligkeit über die 2 m lange Platte um einen Faktor zwischen 2,7 und 2,8 niedriger als bei der nur 1 m langen Platte.

Abgesehen von den vorstehend beschriebenen Parameter hat natürlich auch die Dicke des keramisierenden Artikels entscheidenden Einfluss auf erzielbare Welligkeit. Es versteht sich von selbst, dass dickere Platte bei niedrigen Viskositäten sich weniger leicht verformen als dünne Platten. Auf die Wellenlänge der Verformung wirkt sich die Platten- oder Bandstärke nicht aus, nur auf die Amplitude. Das Verhältnis, das zwischen der Plattendicke und der Welligkeit des keramisierten Artikels besteht, ist quadratisch und lässt sich mittels der Formel

$$R_a/R_{a1} = (t_{Scheibe}/t_{Scheibe1})^2 * (\eta/\eta_1)$$

beschreiben, wobei $t_{Scheibe}$ die Scheibendicke ist. Der zusätzliche Index 1 bezeichnet die gleichen Parameter, jedoch für unterschiedliche Scheibendicken.

Aus den verschiedenen Einflussfaktoren, die wie vorstehend beschrieben wurden, lässt sich eine Formel ableiten, die die verschiedenen Einflussfaktoren auf die Welligkeit berücksichtigt. Es ergibt sich

$$R_a/R_{a1} = \eta/\eta_1 * (x_{Rolle}/x_{Rolle1})^5 *$$
$$(v_{Vorschub}/(v_{Vorschub1} + \Delta v_{Vorschub1})) * (t_{Scheibe}/t_{Scheibe1})^2$$

Der zusätzliche Index 1 bezeichnet die gleichen Parameter, jedoch in Abhängigkeit von einem veränderten Parameter.

**Patentansprüche**

**1.** Verfahren zur Keramisierung von Grünglas in Form eines kontinuierlichen Grünglas-Bandes oder einzelner Grünglas-Platten, wobei

- das Grünglas zumindest während der Volumenkristallisation direkt auf Rollen transportiert wird,
- der gesamte Keramisierungsprozess zumindest eines in einem Ofen befindlichen Teilstücks des Grünglases zwischen 0,5 und 4 Stunden dauert, wobei das zumindest eine Teilstück während der Volumenkristallisation einer Maximaltemperatur zwischen 750 und 1250°C für 5 bis 60 Minuten ausgesetzt wird,
- die Volumenkristallisation in einem Temperaturbereich zwischen 750 und 1250°C durchgeführt wird, wobei die Temperatur von Ober- und Unterseite des zumindest einen keramisierenden Teilstücks des Grünglases durchgehend gemessen wird und die Beheizung mittels dieser Informationen anhand von Sollwerten mittels einer Mess- und Regeleinrichtung geregelt wird,
- das zumindest eine Teilstück kurz vor und zumindest zu Beginn der Volumenkristallisation mit einer Vorschubgeschwindigkeit, die zwischen 0,2 und 10 m/min liegt, auf den Rollen vorwärts bewegt wird,
- die Viskosität des zumindest einen Teilstücks des Grünglases kurz vor und zumindest zu Beginn der Volumenkristallisation zumindest zeitweise zwischen $10^7$ und $10^{11}$ dPa·s liegt,
- die Temperatur und/oder die Vorschubgeschwindigkeit so geregelt werden, dass bezüglich des Abstands $x_{Rolle}$ der Rollenachsen gilt

$$x_{Rolle}^5 \leq 360 * (R_a * t_{Scheibe}^2)/(\rho * g) * v_{Vorschub} * \eta,$$

wobei $R_a$ die maximale Welligkeit, $t_{Scheibe}$ die Glasdicke, $\rho$ die Glasdichte, g die Erdbeschleunigung, $v_{Vorschub}$ die Vorschubgeschwindigkeit und $\eta$ die minimale Viskosität des Glases im Verlauf der Keramisierung auf den Rollen ist und

- wobei die Temperatur so geregelt wird, dass sie im Ofen über eine Breite des zu keramisierenden Grünglases $T_y$ nicht mehr als -5°C bis +5°C von einer vorgegebenen Solltemperatur $T_x$ abweicht, dass der Temperaturunterschied zwischen Ober- und Unterseite des zu keramisierenden Grünglases im Ofen in einem Bereich zwischen - 0.5°C bis +1°C liegt und dass eine Reaktion einer Mess- und Regeleinrichtung auf veränderte Bedingungen innerhalb von zehn Sekunden erfolgt.

2. Verfahren nach Anspruch 1, **dadurch gekennzeichnet, dass** das Grünglas, das keramisiert wird, eine Zusammensetzung gemäß:

| | |
|---|---|
| 60 - 73,0 | Gew.-%$SiO_2$, |
| 15 - 25,0 | Gew.-%$Al_2O_3$, |
| 2,0 - 5,0 | Gew.-%$Li_2O$, |
| 0 - 5,0 | Gew.-%$CaO + SrO + BaO$, |
| 0 - 5,0 | Gew.-%$TiO_2$, |
| 0 - 5,0 | Gew.-%$ZrO_2$, |
| 0 - 4,0 | Gew.-%$ZnO$ |
| 0 - 3,0 | Gew.-%$Sb_2O_3$, |
| 0 - 3,0 | Gew.-%$MgO$, |
| 0 - 3,0 | Gew.-%$SnO_2$ |
| 0 - 2,0 | Gew.-%$P_2O_5$, |
| 0 - 1,5 | Gew.-%$As_2O_3$, |
| 0 - 1,2 | Gew.%$Na_2O + K_2O$, wobei die jeweiligen Anteile vorzugsweise innerhalb der nachfolgend angegebenen Bereiche liegen, |
| 0 - 1,0 | Gew.-%$Na_2O$, |
| 0 - 0,5 | Gew.-%$K_2O$ |

aufweist.

3. Verfahren nach Anspruch 1 oder 2, **dadurch gekennzeichnet, dass** die Temperatur von Ober- und Unterseite des zumindest einen keramisierenden Teilstücks des Grünglases mittels Temperaturfühlern, die eine Reaktionszeit von im günstigsten Fall einer Sekunde aufweisen, gemessen wird und die Beheizung innerhalb von 10 Sekunden geregelt wird.

4. Verfahren nach einem der vorstehenden Ansprüche, **dadurch gekennzeichnet, dass** Grünglasplatten schräg auf die Transporteinrichtung aufgebracht werden, so dass eine ihrer Ecken der restlichen Platte voraus läuft.

5. Vorrichtung zur kontinuierlichen Keramisierung von Grünglas, umfassend

- einen Durchlaufofen zum Keramisieren des Grünglases, wobei der Durchlaufofen dazu eingerichtet ist, den gesamten Keramisierungsprozess innerhalb von 0,5 bis 4 Stunden durchzuführen, wobei
- zumindest eine Kammer des Durchlaufofens dazu eingerichtet ist 5 bis 60 Minuten lang eine Maximaltemperatur von 750 bis 1250°C zu erzeugen und wobei
- zumindest eine Kammer des Durchlaufofens, die für eine Volumenkristallisation des Grünglases eingerichtet ist, Einrichtungen aufweist, die das getrennte Erhitzen einer Ober- und einer Unterseite des zu keramisierenden Grünglases erlaubt,
- eine Mess- und Regeleinrichtung, die dazu eingerichtet ist, Temperaturveränderungen an Ober- und Unterseite des keramisierenden Grünglases wahrzunehmen und die Beheizung des Ofens entsprechend vorgegebenen Sollwerten anzupassen,
- eine Transporteinrichtung, die zumindest in dem Ofenbereich, in dem die Volumenkristallisation stattfindet, Rollen zum Transportieren und/oder Lagern des Grünglases umfasst, wobei die Transporteinrichtung dazu eingerichtet ist, das zu keramisierende Grünglas mit einer Vorschubgeschwindigkeit von 0,2 bis 10 m/min. zu transportieren, wobei

- die Mess- und Regeleinrichtung eingerichtet ist, die Temperatur und/oder die Vorschubgeschwindigkeit so zu regeln, dass bezüglich des Abstands $x_{Rolle}$ der Rollenachsen gilt

$$x_{Rolle}^5 \leq 360 * (R_a * t_{Scheibe}^2)/(\rho * g) * v_{Vorschub} * \eta,$$

wobei $R_a$ die maximale Welligkeit, $t_{Scheibe}$ die Glasdicke, $\rho$ die Glasdichte, g die Erdbeschleunigung, $v_{Vorschub}$ die Vorschubgeschwindigkeit und $\eta$ die minimale Viskosität des Glases im Verlauf der Keramisierung auf den Rollen ist und wobei

- die Vorrichtung derart zur Temperaturregelung ausgebildet ist, dass die Temperatur im Ofen über eine Breite des zu keramisierenden Grünglases $T_y$ nicht mehr als -5°C bis +5°C von einer vorgegebenen Solltemperatur $T_x$ abweicht, dass der Temperaturunterschied zwischen Ober- und Unterseite des zu keramisierenden Grünglases im Ofen in einem Bereich zwischen -0.5°C bis +1°C liegt und dass die Mess- und Regeleinrichtung zu einer innerhalb von zehn Sekunden erfolgenden Reaktion auf veränderte Bedingungen ausgebildet ist.

6. Vorrichtung nach Anspruch 5, **dadurch gekennzeichnet, dass** die Rollenoberflächen zumindest eines der Materialien umfassend Siliziumkarbid, Quarz, Korund oder Mischungen aus dem System Schmelz-/Sinter-Mullit und Sillimantin enthalten.

7. Vorrichtung nach Anspruch 5 oder 6, **dadurch gekennzeichnet, dass** die Abstände zwischen den Rollen aperiodisch sind.

## Claims

1. A method for ceramizing green glass in the form of a continuous green glass ribbon or of individual green glass sheets, wherein

- the green glass is conveyed directly on rollers, at least during volume crystallization;
- the entire ceramization process of at least one portion of the green glass located in a furnace takes between 0.5 and 4 hours, wherein the at least one portion is exposed to a maximum temperature between 750 and 1250 °C for 5 to 60 minutes during the volume crystallization;
- the volume crystallization is carried out in a temperature range between 750 and 1250 °C, and the temperature of the upper and lower faces of the at least one ceramizing portion of the green glass is continuously measured and heating is controlled using this information and based on target values, by a measuring and control device;
- just before and at least at the beginning of volume crystallization, the at least one portion is advanced on the rollers at an advance rate ranging between 0.2 and 10 m/min;
- just before and at least at the beginning of volume crystallization, the viscosity of the at least one portion of the green glass is at least temporarily between $10^7$ and $10^{11}$ dPa·s;
- the temperature and/or the advance rate is controlled such that the following applies with respect to the distance $x_{roller}$ of the roller axes:

$$x_{roller}^5 \leq 360 * (R_a * t_{sheet}^2)/(\rho*g) * v_{advance} * \eta,$$

wherein $R_a$ is the maximum waviness, $t_{sheet}$ is the glass thickness, $\rho$ is the glass density, g is the acceleration due to gravity, $v_{advance}$ is the advance rate and $\eta$ is the minimum viscosity of the glass during ceramization on the rollers; and

- wherein the temperature is controlled so that the temperature $T_y$ in the furnace over a width of the green glass to be ceramized does not deviate by more than -5 °C to +5 °C from a predefined target temperature $T_x$, that a temperature difference between the upper and lower faces of the green glass to be ceramized in the furnace ranges between -0.5 °C and +1 °C, and so that a measuring and control device is responsive to changed conditions within ten seconds.

2. The method according to claim 1, **characterised in that** the green glass that is being ceramized has a composition according to:

| | |
|---|---|
| 60 - 73.0 | wt% $SiO_2$ |
| 15 - 25.0 | wt% $Al_2O_3$ |
| 2.0 - 5.0 | wt% $Li_2O$ |
| 0 - 5.0 | wt% $CaO + SrO + BaO$ |
| 0 - 5.0 | wt% $TiO_2$ |
| 0 - 5.0 | wt% $ZrO_2$ |
| 0 - 4.0 | wt% $ZnO$ |
| 0 - 3.0 | wt% $Sb_2O_3$ |
| 0 - 3.0 | wt% $MgO$ |
| 0 - 3.0 | wt% $SnO_2$ |
| 0 - 2.0 | wt% $P_2O_5$ |
| 0 - 1.5 | wt% $As_2O_3$ |
| 0 - 1.2 | wt% $Na_2O + K_2O$, with the respective contents preferably within the ranges given below |
| 0 - 1.0 | wt% $Na_2O$ |
| 0 - 0.5 | wt% $K_2O$. |

3. The method according to claim 1 or 2, **characterised in that** the temperature of the upper and lower faces of the at least one ceramizing portion of the green glass is measured using temperature sensors which have a response time of one second at best, and that the heating is controlled within 10 seconds.

4. The method according to any one of the preceding claims, **characterised in that** green glass sheets are placed obliquely on the conveying means so that one of the corners of the glass sheet leads the remaining sheet.

5. A device for continuously ceramizing green glass, comprising:

- a continuous furnace for ceramizing the green glass, the continuous furnace being configured for carrying out the entire ceramization process within 0.5 to 4 hours;
- wherein at least one chamber of the continuous furnace is configured for generating a maximum temperature from 750 °C to 1250 °C for 5 to 60 minutes; and
- wherein at least one chamber of the continuous furnace, which is configured for volume crystallization of the green glass, comprises means allowing to separately heat an upper face and a lower face of the green glass to be ceramized;
- a measuring and control device which is configured for detecting temperature changes on the upper and lower faces of the ceramizing green glass and to adjust the heating of the furnace in accordance with predefined target values;
- conveying means comprising rollers for conveying and/or supporting the green glass, at least in the section of the furnace in which volume crystallization takes place, wherein the conveying means are configured for conveying the green glass to be ceramized at an advance rate of 0.2 to 10 m/min;
- wherein the measuring and control device is configured for controlling the temperature and/or the advance rate so that the following applies with respect to the distance $x_{roller}$ of the roller axes:

$$x_{roller}^5 \leq 360 * (R_a * t_{sheet}^2) / (\rho * g) * v_{advance} * \eta,$$

wherein $R_a$ is the maximum waviness, $t_{sheet}$ is the glass thickness, $\rho$ is the glass density, $g$ is the acceleration due to gravity, $v_{advance}$ is the advance rate, and $\eta$ is the minimum viscosity of the glass during ceramization on the rollers; and
- wherein the device is configured for controlling the temperature so that the temperature $T_y$ in the furnace over the width of the green glass to be ceramized does not deviate by more than -5 °C to +5 °C from a predefined target temperature $T_x$, that a temperature difference between the upper and lower faces of the green glass to be ceramized in the furnace ranges between -0.5 °C and +1 °C, and so that the measuring and control device is configured to be responsive to changed conditions within ten seconds.

6. The device according to claim 5, **characterised in that** the roller surfaces contain at least one of the materials comprising silicon carbide, quartz, corundum or mixtures of the system of fused/sintered mullite and Sillimantin.

7. The device according to claim 5 or 6, **characterised in that** the distances between the rollers are aperiodic.

**Revendications**

1. Procédé de céramisation de verre vert sous forme de bande continue de verre vert ou de plaques individuelles de verre vert, dans lequel :

   - le verre vert est transporté directement sur rouleaux au moins pendant la cristallisation volumique,
   - l'opération complète de céramisation d'au moins une portion du verre vert se trouvant dans un four dure entre 0,5 et 4 heures, où l'au moins une portion est soumise pendant la cristallisation volumique à une température maximale comprise entre 750 et 1250°C pendant 5 à 60 minutes,
   - la cristallisation volumique est réalisée dans une plage de températures comprise entre 750 et 1250°C, où la température de la face supérieure et de la face inférieure de l'au moins une portion du verre vert en cours de céramisation est mesurée en continu et le chauffage est réglé au moyen de ces informations à l'aide de valeurs de consigne par un système de mesure et de régulation,
   - l'au moins une portion est déplacée vers l'avant sur les rouleaux juste avant et au moins au début de la cristallisation volumique à une vitesse d'avancée qui est comprise entre 0,2 et 10 m/min,
   - la viscosité de l'au moins une portion du verre vert est comprise au moins temporairement entre $10^7$ et $10^{11}$ dPa·s juste avant et au moins au début de la cristallisation volumique,
   - la température et/ou la vitesse d'avancée sont régulées de manière à avoir en ce qui concerne la distance $X_{rouleau}$ des axes de rouleaux

$$X_{rouleau}^5 \leq 360 * (R_a * t_{vitre}^2)/(\rho * g) * v_{avancée} * \eta,$$

   où $R_a$ est l'ondulation maximale, $t_{vitre}$ l'épaisseur du verre, $\rho$ la densité du verre, g la force de gravité, $v_{avancée}$ la vitesse d'avancée et $\eta$ la viscosité minimale du verre au cours de la céramisation sur les rouleaux, et
   - où la température est réglée de manière à ne pas diverger dans le four de plus de -5°C à +5°C par rapport à une température de consigne prédéfinie $T_x$ sur une largeur du verre vert à céramiser $T_y$, de manière à avoir une différence de température entre la face supérieure et la face inférieure du verre vert à céramiser dans le four dans une plage comprise entre -0,5°C et +1°C et à obtenir une réaction d'un système de mesure et de régulation en réponse à des conditions modifiées en dix secondes.

2. Procédé selon la revendication 1, **caractérisé en ce que** le verre vert qui est céramisé présente une composition conforme à :

   | | |
   |---|---|
   | 60 à 73,0 | % en poids de $SiO_2$, |
   | 15 à 25,0 | % en poids de $Al_2O_3$, |
   | 2,0 à 5,0 | % en poids de $Li_2O$, |
   | 0 à 5,0 | % en poids de $CaO + SrO + BaO$, |
   | 0 à 5,0 | % en poids de $TiO_2$, |
   | 0 à 5,0 | % en poids de $ZrO_2$, |
   | 0 à 4,0 | % en poids de $ZnO$, |
   | 0 à 3,0 | % en poids de $Sb_2O_3$, |
   | 0 à 3,0 | % en poids de $MgO$, |
   | 0 à 3,0 | % en poids de $SnO_2$, |
   | 0 à 2,0 | % en poids de $P_2O_5$, |
   | 0 à 1,5 | % en poids de $As_2O_3$, |
   | 0 à 1,2 | % en poids de $Na_2O + K_2O$, |

   où les proportions respectives sont comprises de préférence dans les plages indiquées dans ce qui suit,

|        |                           |
|--------|---------------------------|
| 0 à 1,0 | % en poids de $Na_2O$,   |
| 0 à 0,5 | % en poids de $K_2O$.    |

**3.** Procédé selon la revendication 1 ou 2, **caractérisé en ce que** la température de la face supérieure et de la face inférieure de la portion du verre vert en cours de céramisation est mesurée par des capteurs de température qui présentent un temps de réaction d'une seconde dans le meilleur des cas, et le chauffage est réglé en 10 secondes.

**4.** Procédé selon l'une des revendications précédentes, **caractérisé en ce que** des plaques de verre vert sont déposées à l'oblique sur le système de transport de sorte qu'un de leurs coins avance avant le reste de la plaque.

**5.** Dispositif pour la céramisation continue du verre vert, comprenant :

- un four continu pour la céramisation du verre vert, où le four continu est agencé de manière à réaliser la totalité de l'opération de céramisation en 0,5 à 4 heures, où
- au moins une chambre du four continu est agencée pour générer pendant 5 à 60 minutes une température maximale de 750 à 1250°C, et où
- au moins une chambre du four continu qui est agencée pour une cristallisation volumique du verre vert présente des systèmes permettant de chauffer séparément une face supérieure et une face inférieure du verre vert à céramiser,
- un système de mesure et de régulation agencé pour percevoir les variations de température sur la face supérieure et la face inférieure du verre vert en cours de céramisation et adapter le chauffage du four conformément à des valeurs de consigne prédéfinies,
- un système de transport qui comprend des rouleaux pour le transport et/ou le stockage du verre vert au moins dans une zone du four dans laquelle la cristallisation volumique s'opère, où le système de transport est agencé pour transporter le verre vert à céramiser à une vitesse d'avancée de 0,2 à 10 m/min, où
- le système de mesure et de régulation est agencé pour réguler la température et/ou la vitesse d'avancée de manière à avoir en ce qui concerne la distance $X_{rouleau}$ des axes de rouleaux

$$X_{rouleau}^5 \leq 360 * (R_a * t_{vitre}^2)/(\rho * g) * v_{avancée} * \eta,$$

où $R_a$ est l'ondulation maximale, $t_{vitre}$ l'épaisseur du verre, $\rho$ la densité du verre, g la force de gravité, $v_{avancée}$ la vitesse d'avancée et $\eta$ la viscosité minimale du verre au cours de la céramisation sur les rouleaux, et où
- le dispositif est conçu pour réguler la température de manière que la température dans le four ne diverge pas de plus de -5°C à +5°C par rapport à une température de consigne prédéfinie $T_x$ sur une largeur du verre vert à céramiser $T_y$, de manière qu'une différence de température entre la face supérieure et la face inférieure du verre vert à céramiser dans le four se situe dans une plage comprise entre -0,5°C et +1°C et de manière que le système de mesure et de régulation soit conçu pour avoir une réaction dans les dix secondes en réponse à des conditions modifiées.

**6.** Dispositif selon la revendication 5, **caractérisé en ce que** les surfaces des rouleaux contiennent au moins un des matériaux comprenant du carbure de silicium, du quartz, du corindon ou des mélanges du système mullite de fonte/frittage et sillimantine.

**7.** Dispositif selon la revendication 5 ou 6, **caractérisé en ce que** les distances entre les rouleaux sont apériodiques.

Fig. 1a

Fig. 1b

Fig. 2a

Fig. 2b

Fig. 3

Fig. 4

Fig. 5

Fig. 6

Fig. 7

# Fig. 8

**EP 2 414 297 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2204311 A
- US 2005016214 A1
- US 3804608 A
- US 3809542 A
- EP 1146018 A1